# EUROPEAN PATENT SPECIFICATION

(11) **EP 3 975 435 B1**
(45) Date of publication and mention of the grant of the patent: **15.01.2025**
(21) Application number: 19936778.0
(22) Date of filing: 10.07.2019
(51) Int. Cl.: H04B 1/38, H04Q 9/00, B64D 11/00

(54) **DISPLAY DEVICE, RADIO WAVE INTENSITY CONTROL SYSTEM, AND RADIO WAVE INTENSITY CONTROL METHOD**
ANZEIGEVORRICHTUNG, SYSTEM ZUR STEUERUNG DER INTENSITÄT VON FUNKWELLEN UND VERFAHREN ZUR STEUERUNG DER INTENSITÄT VON FUNKWELLEN
DISPOSITIF D'AFFICHAGE, SYSTÈME DE COMMANDE D'INTENSITÉ D'ONDE RADIO, ET PROCÉDÉ DE COMMANDE D'INTENSITÉ D'ONDE RADIO

(43) Date of publication of application: 30.03.2022
(73) Proprietor: Panasonic Intellectual Property Management Co., Ltd., Osaka-shi, Osaka 540-6207 (JP)
(72) Inventor: NARUKAMI, Yoshito, Osaka-shi, Osaka 540-6207 (JP)
(74) Representative: Eisenführ Speiser
(86) International application number: PCT/JP2019/027317
(87) International publication number: WO 2021/005746

(56) References cited:
- JP-A- 2013 128 162
- JP-A- 2013 219 750
- JP-A- 2014 146 860
- JP-A- 2017 178 487
- US-A1- 2011 314 507
- US-A1- 2016 241 698
- US-B1- 10 313 982

## Description

### TECHNICAL FIELD

The present disclosure relates to a display device, a radio field control system, and a radio field control method in which a radio field of a remote controller or another wireless terminal of the display device, which provides information to a passenger on an aircraft, a train, a ship, or another moving body, is controlled.

### BACKGROUND ART

Patent literature 1 (Japanese Laid-Open Patent Publication No. 2013-128162) discloses a wireless communication device to perform long-range communication and short-range communication with a target device. The wireless communication device assesses whether or not short-range wireless communication with the target device is possible, and reduces radio field intensity of long-range communication upon assessing that short-range communication is possible.

Patent literature 2 (US Patent Application Publication US 2016/0241698 A1) discloses a Bluetooth control system including a head unit for acquiring a door open or closed signal from doors of a vehicle when the doors are opened or closed. The head unit selectively turns on or off Bluetooth connection of a mobile device using a set application based on the door open or closed signal.

### DISCLOSURE OF THE INVENTION

### PROBLEM TO BE SOLVED BY THE INVENTION

Wireless communication in an aircraft or another moving body is restricted by various factors. When a remote controller for a passenger to operate a display device is made wireless in an aircraft or another moving body, a radio field outputted by the remote controller is similarly restricted. Therefore, it has been substantially difficult to make the remote controller wireless.

The present disclosure provides a display device, a radio field control system, and a radio field control method that are effective in controlling the setting of a radio field outputted by a remote controller or another wireless terminal to an appropriate state in a moving body.

### MEANS FOR SOLVING THE PROBLEM

A display device according to the present disclosure is defined in claim 1.

A radio field control system according to the present disclosure comprises the above display device and the wireless terminal. The wireless terminal is capable of wirelessly connecting to the display device, and the wireless terminal is configured to change the output of the first radio field in accordance with the establishment of the setting of the first radio field made by the controller.

A radio field intensity control method according to the present disclosure is defined in claim 10.

### BRIEF DESCRIPTION OF THE DRAWINGS

FIG. 1 is a layout of a communication system disposed in an aircraft;
FIG. 2 is an overall structural diagram of a radio field intensity control system according to Embodiment 1;
FIG. 3 is a structural diagram of a display device according to Embodiment 1;
FIG. 4 is a structural diagram of a remote controller according to Embodiment 1;
FIG. 5 is a structural diagram of a management device according to Embodiment 1;
FIG. 6 is a flowchart of actions in radio field intensity control for the display device according to Embodiment 1;
FIG. 7 is a flowchart of a radio field intensity establishment process performed by the display device according to Embodiment 1;
FIG. 8 is a table of action details in radio field intensity control for the display device according to Embodiment 1;
FIG. 9 is a flowchart of a radio field intensity establishment process performed by a display device according to another embodiment;
FIG. 10 is a flowchart of another radio field intensity establishment process performed by a display device according to another embodiment; and
FIG. 11 is a flowchart of yet another radio field intensity establishment process performed by a display device according to another embodiment.

### EMBODIMENTS

Embodiments are described in detail below with reference to the drawings as appropriate. However, unnecessarily detailed descriptions may be omitted. For example, detailed descriptions of well-known matters and duplicate descriptions for substantially the same configuration may be omitted.

It should be noted that the accompanying drawings and the descriptions below are provided for those skilled in the art to sufficiently understand the present disclosure, and are not intended to limit the subject matter set forth in the claims.

### 1. Embodiment 1

Conventionally, passengers in aircraft have wanted to use wireless remote controllers to operate display devices each placed in a seat. However, wireless communication used in aircraft moving across national borders is restricted to the laws and jurisdiction of each country. For example, depending on the laws and jurisdiction of each country and rules of airline companies, it may be necessary to refrain from using wireless signals at times such as takeoff and landing. Furthermore, it is necessary to suppress the burden of maintaining the remote controller including, *inter alia*, replacing and charging a battery.

The present embodiment describes a display device, a radio field intensity control system, and a radio field intensity control method in which a passenger can use a remote controller wirelessly in a restricted wireless communication environment, and the burden of maintaining the remote controller can be suppressed by suppressing battery consumption.

### 1-1. Configuration

### 1-1-1. Configuration of radio field intensity control system

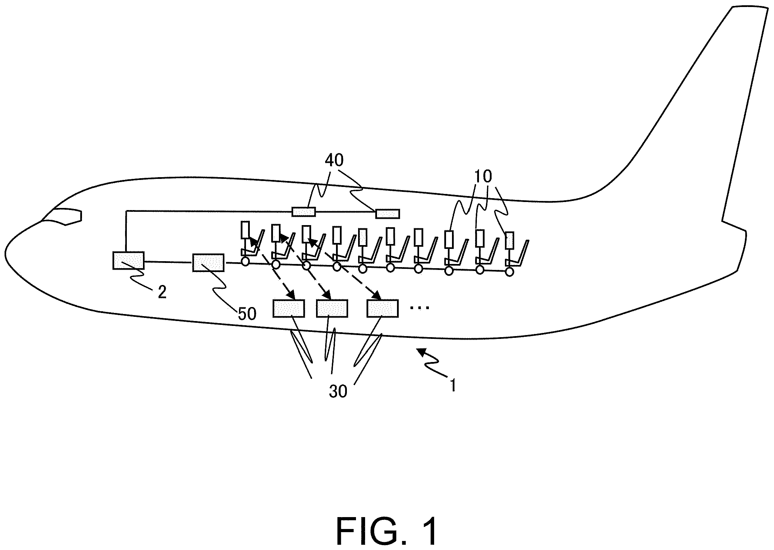

A radio field intensity control system 1 according to Embodiment 1 is disposed in an aircraft, which is one example of a moving body, as shown in FIG. 1.

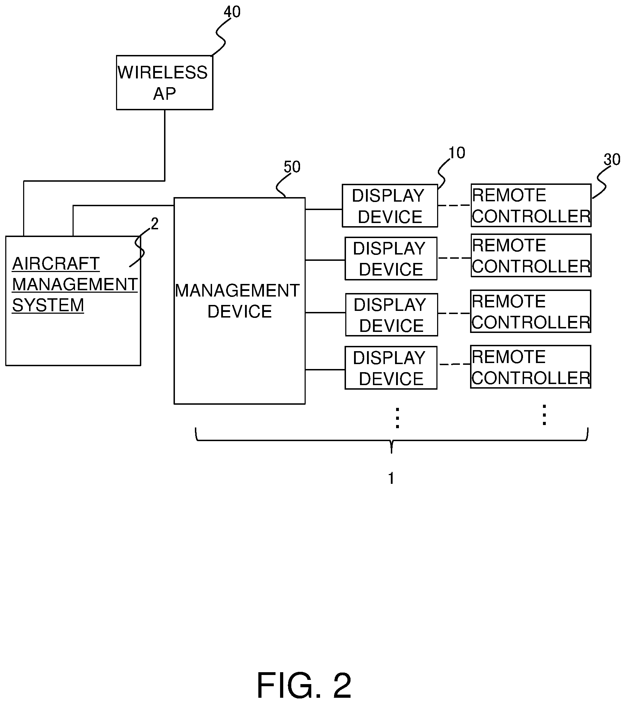

The radio field intensity control system 1 comprises display devices 10 each disposed in a seat, remote controllers 30 (one example of wireless terminals) of the display devices 10, and a management device 50 to provide videos, music, and other content to the display devices 10, as shown in FIGS. 1 and 2. The management device 50 is connected to an aircraft management system 2. The aircraft management system 2 is also connected to wireless access points (APs) 40 disposed in the aircraft. The management device 50 can acquire information pertaining to the usage status of the wireless access points 40 from the aircraft management system 2. The wireless access points 40 are access points for WiFi^{®} or another type of wireless communication. The wireless access points 40 connect smartphones, tablets, or other wireless terminals (not shown) used by the passengers to the Internet. A plurality of wireless access points 40 are placed according to the size of the aircraft cabin and the number of seats.

The radio field intensity control system 1 can connect to the aircraft management system 2, and acquires flight information (one example of operation information) of the aircraft as shall be described hereinafter. The aircraft management system 2 acquires, updates, and stores the flight information of the aircraft. The flight information includes, *inter alia*, position information (latitude, longitude, etc.), altitude information, seat information (seat numbers, etc.), airframe information (model, etc.), and schedule information (flight schedule including scheduled arrival time, departure time, etc., and speed, direction of travelling, etc.) of the aircraft.

The radio field intensity control system 1 may function as part of an in-flight entertainment (IFE) system.

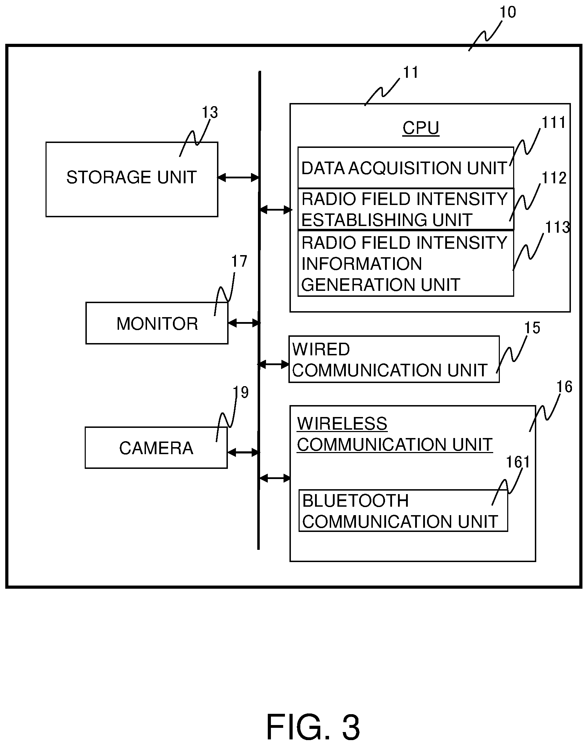

The configuration of the devices of the radio field intensity control system 1 shall be described below with reference to FIGS. 3-5.

### 1-1-2. Configuration of display device

A display device 10 is installed in each seat, and each display device displays content such as videos and music and other information distributed from the management device 50. The display device 10 performs actions such as displaying information and adjusting volume in accordance with operation of the remote controller 30 by the passenger. The display device 10 also adjusts a radio field intensity of the remote controller 30 as shall be described hereinafter.

The display device 10 is provided with a CPU 11 for performing functions of the display device 10, a storage unit 13, a wired communication unit 15, a wireless communication unit 16, a monitor 17, and a camera 19, as shown in FIG. 3.

The CPU 11 (one example of a controller) includes circuitry to execute the functions of the display device 10. By executing predetermined programs, the CPU 11 executes functions of a data acquisition unit 111, a radio field intensity establishment unit 112, and a radio field intensity information generation unit 113.

The data acquisition unit 111 acquires data for establishing the radio field intensity of the remote controller 30. The data pertains to flight information transmitted from the management device 50.

The radio field intensity establishment unit 112 establishes, on the basis of the acquired flight information data, a radio field intensity for the remote controller 30 to connect to the display device 10. Establishing the radio field intensity includes, for example, increasing the intensity of the radio field, reducing the intensity of the radio field, setting radio output to OFF, or changing a radio frequency band.

The radio field intensity information generation unit 113 generates radio field intensity information including a value of the established radio field intensity or a command to set the radio output to OFF, and transmits the radio field intensity information to the remote controller 30 via the wireless communication unit 16. The radio field intensity information includes the established radio field intensity value, the frequency band, etc.

The storage unit 13 is, for example, a semiconductor memory. The storage unit 13 stores data transmitted from the management device 50 and a program for controlling the display device 10.

The wired communication unit 15 (one example of a first receiver) includes, for example, a connection terminal, and is connected to the management device 50 via a cable, relay equipment, etc. The wired communication unit 15 receives flight information from the management device 50.

The wireless communication unit 16 (one example of a transmitter) has an antenna for conducting wireless communication, a wireless circuit, etc., and communicates data to the wireless terminal by wireless communication. The wireless communication unit 16 includes a Bluetooth^{®} communication unit 161. The Bluetooth^{®} communication unit 161 communicates with the remote controller 30, which is paired according to the Bluetooth^{®} standard. Communication with the remote controller 30 may be performed using another wireless communication standard as long as the standard is suitable for short-range wireless communication.

The monitor 17 has an LCD, an organic EL display, or another display screen. The monitor 17 is attached in a back portion of a front seat, or another position that is easily visible when the passenger is seated. The monitor 17 may be provided with a touch panel.

The camera 19 (one example of an imaging unit) is disposed so as to have the area forward of the monitor 17 as an imaging range. The camera 19 images the passenger sitting in front of the monitor 17, and acquires an image of the passenger.

### 1-1-3. Configuration of remote controller

The remote controller 30 transmits a signal to the display device 10 and actuates the display device 10 in accordance with operation by the passenger.

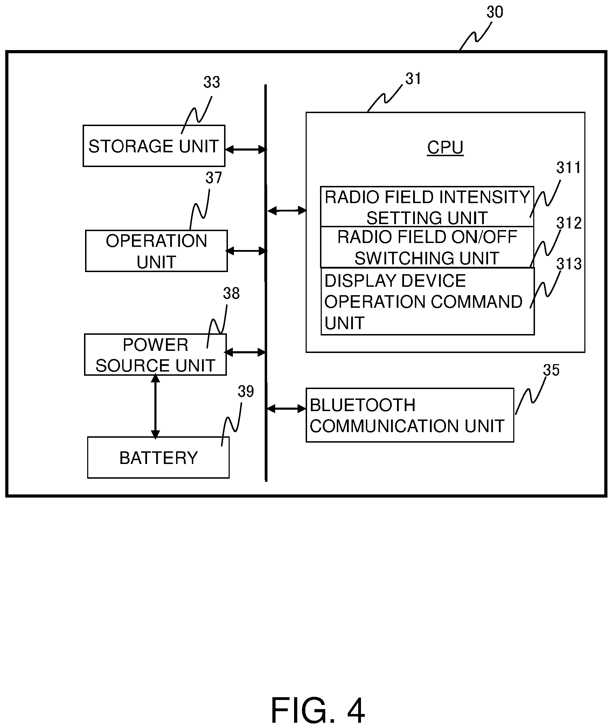

The remote controller 30 is equipped with a battery 39 as a power source, as shown in FIG. 4. The battery may be a primary battery or a secondary battery, but when the battery is used in an aircraft, a manganese dry battery may be used in consideration of safety (to avoid the risk of liquid leakage, ignition, etc.) and the burden of maintenance.

The remote controller 30 is further provided with a CPU 31, a storage unit 33 a Bluetooth^{®} communication unit 35, an operation unit 37, and a power source unit 38.

The CPU 31 includes circuitry to execute functions of the remote controller 30. By executing a predetermined program, the CPU 31 executes a function of a radio field intensity setting unit 311, a wireless ON/OFF switching unit 312, or a display device operation command unit 313.

The radio field intensity setting unit 311 sets/changes a radio field intensity of the Bluetooth^{®} communication unit 35 in accordance with radio field intensity information received from the display device 10.

The wireless ON/OFF switching unit 312 sets the output of the radio field of the Bluetooth^{®} communication unit 35 to OFF in accordance with the radio field intensity information received from the display device 10. Setting the output of the radio field to OFF is, for example, setting the output of the radio field outputted by the remote controller 30 to 0. Alternatively, the output of the radio field may be set to OFF by setting the power source of the remote controller 30 to OFF.

The display device operation command unit 313 generates a command signal to actuate the display device 10 in accordance with operation of the operation unit 37 by the passenger, and transmits the command signal via the Bluetooth^{®} communication unit 35. The command signal is, for example, a command signal for changing a channel, adjusting volume, switching screens, selecting a menu, etc.

The storage unit 33 is, for example, a semiconductor memory. The storage unit 33 stores data and a program for controlling the remote controller 30.

The Bluetooth^{®} communication unit 35 communicates with the display device 10, which is paired according to the Bluetooth^{®} standard. Communication with the remote controller 30 may be performed using another wireless communication standard as long as the standard is suitable for short-range wireless communication.

The operation unit 37 is, for example, a plurality of buttons arranged on the outer surface of the remote controller 30. The buttons include a power button, a channel button, a volume button, a menu selection button, etc. Alternatively, the remote controller 30 may be provided with a liquid crystal, organic EL, or other type of display screen and a touch panel, and a plurality of buttons for operation may be displayed on the display screen.

The power source unit 38 controls the supply of power from the battery 39 to the individual parts of the remote controller 30. The power source unit 38 sets the power source of the remote controller 30 to ON or OFF.

The remote controller 30 may be in a configuration enabled for wired use in addition to wireless use. For example, a cradle (not shown) of the remote controller 30 may be attached to a predetermined position on the seat. The cradle is connected to the corresponding display device 10 and the management device 50 by wire. The power source may be set to OFF while the remote controller 30 is set in the cradle.

### 1-1-4. Configuration of management device

The management device 50 is connected to a plurality of display devices 10 via a wired cable or relay equipment. The management device 50 is, for example, a computer device functioning as a server. The management device 50 can connect to one or more display devices 10, and delivers content to the display devices 10 for the users sitting in front of the display devices 10.

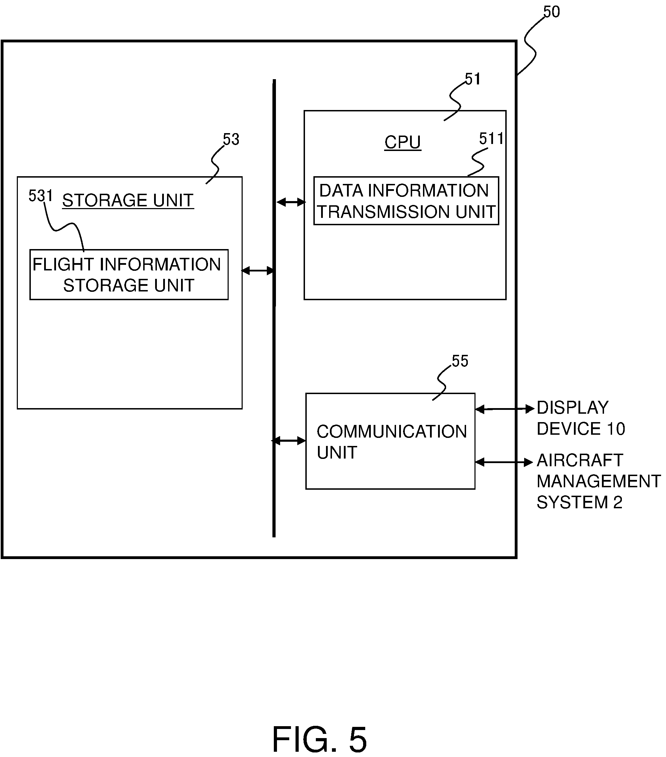

The management device 50 is provided with a CPU 51, a storage unit 53, and a communication unit 55, as shown in FIG. 5.

The CPU 51 executes the functions of the management device 50 by executing predetermined programs. The management device 50 executes a function of a data information transmission unit 511. The data information transmission unit 511 transmits the aforementioned flight information data to the display device 10 via the communication unit 55.

The storage unit 53 is, for example, a semiconductor memory or a magnetic memory. The storage unit 53 stores software and various pieces of data used in the management device 50. The storage unit 53 includes a flight information storage unit 531 to receive flight information from the aircraft management system 2. The flight information is, for example, received and updated at predetermined time intervals.

The communication unit 55 includes circuitry for communicating with other computer equipment, such as a network card or a network adapter. The communication unit 55 is connected to the display devices 10 and the aircraft management system 2 via cables, etc.

### 1-2. Actions

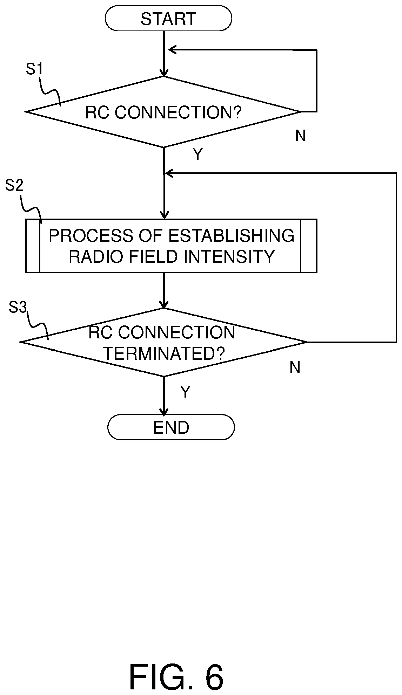

The following is a description, made with reference to FIGS. 6-8, mainly of the actions in radio field intensity control performed by the display device 10.

As shown in FIG. 6, when the display device 10 is connected to the paired remote controller 30 (Yes in S1), the display device 10 executes a process of establishing the radio field intensity of the remote controller 30 (described hereinafter) (S2). Step S2 is repeated as long as the connection of the remote controller 30 is not terminated (S3).

The remote controller 30 outputs a radio field having a predetermined intensity (e.g., a radio field having a default intensity) in an initial state after the power source is set to ON.

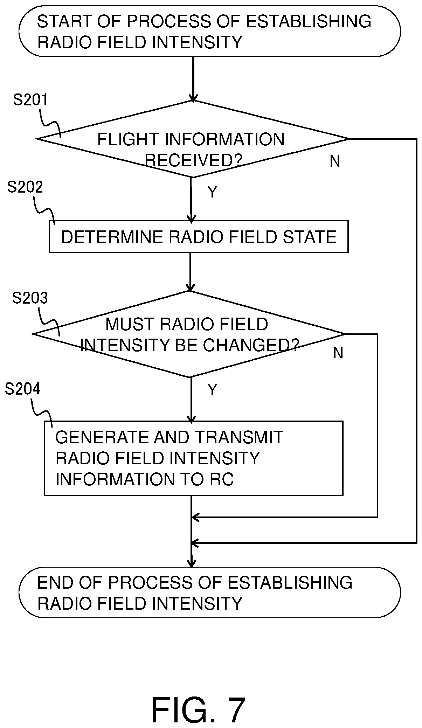

FIG. 7 shows one example of the process of establishing the radio field intensity of the remote controller 30. First, the data acquisition unit 111 of FIG. 3 acquires flight information data from the management device 50 via the Bluetooth^{®} communication unit 161 (S201). The example described here is a case in which the flight information includes flying states (landing state, takeoff state, stable flying, etc.) and the aircraft is in a state of taking off. The radio field intensity establishment unit 112 determines the current radio field intensity (S202). When the aircraft is in a state of taking off, the radio field intensity establishment unit 112 establishes that the radio field intensity will be changed by setting the radio field output to OFF (Yes in S203). The radio field intensity information generation unit 113 generates radio field intensity information (sets the radio field output to OFF) and transmits this information to the remote controller 30 via the Bluetooth^{®} communication unit 161 (S204).

In the remote controller 30, the wireless ON/OFF switching unit 312 sets the radio field output of the Bluetooth^{®} communication unit 35 to OFF in accordance with the radio field intensity information received from the display device 10. Therefore, the remote controller 30 can automatically set the radio field output to OFF in accordance with a situation in which the aircraft is taking off and the use of the radio field is restricted.

After the radio field output has been set to OFF, the remote controller 30 may be reset and returned to an initial state (in which a radio field of a predetermined intensity is outputted) in accordance with a predetermined condition. For example, the remote controller 30 may be returned to the initial state after a predetermined time has elapsed or the remote controller 30 has been set in the cradle. After the radio field output of the remote controller 30 has been set to OFF, and the display device 10 has assessed that the current state allows for radio field output, the display device 10 may pair with the remote controller 30 and may once again execute the radio field intensity establishment process of step S2 via the connection of step S1 in FIG. 6.

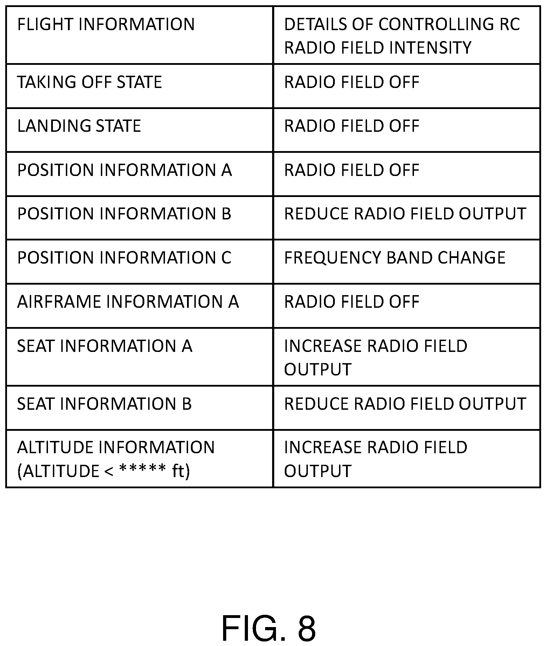

FIG. 8 shows the details of controlling the radio field intensity of the remote controller 30 corresponding to the details of the flight information. As shown in FIG. 8, when the flight information indicates a taking off state or a landing state, the radio field output is set to OFF. When the aircraft is taking off or landing, there are cases in which the passenger is unable to use the display device 10 as well as cases in which wireless communication is restricted on safety or jurisdictional grounds; therefore, the radio field output of the remote controller 30 is set to OFF.

Furthermore, the radio field output is set to OFF when the position of the aircraft is under the jurisdiction of a specified country from the flight information and the use of a radio field is prohibited (position information A). Alternatively, when the position of the aircraft is under the jurisdiction of a predetermined country from the flight information and the use of a radio field is restricted (position information B), the radio field output is lowered. Alternatively, when the position of the aircraft is under the jurisdiction of a predetermined country from the flight information and the frequency band used by the remote controller 30 is not permitted (position information C), the frequency band is changed.

In addition, depending on the type of the aircraft, a predetermined wireless technology (e.g., Bluetooth^{®}) may not be useable. In this case (e.g., airframe information A), the radio field output is set to OFF.

In addition, the radio field output may be increased or decreased in accordance with the seat information. For example, if the seat is first class, the distance between the display device 10 and the passenger is greater, and the radio field output is therefore increased. If the seat is economy class, the distance between the display device 10 and the passenger is smaller, and the radio field output is therefore reduced.

"Increasing the radio field output" includes outputting a radio field having a higher radio field intensity than the current radio field determined in step S202 of FIG. 7, or increasing the output to a predetermined radio field intensity included in the radio field intensity information. When the current radio field intensity is sufficiently strong, it is determined in step S203 of FIG. 7 that the radio field intensity does not need to be changed, and it is acceptable to not change the radio field intensity. Similarly, "reducing the radio field output" includes outputting a radio field having a lower radio field intensity than the current radio field determined in step S202 of FIG. 7, or reducing the output to a predetermined radio field intensity included in the radio field intensity information. When the current radio field intensity is sufficiently weak, it is determined in step S203 of FIG. 7 that the radio field intensity does not need to be changed, and it is acceptable to not change the radio field intensity.

Furthermore, when the altitude at which the aircraft flies falls below a predetermined value, the radio field output may be increased. For example, if there is an aircraft at an altitude close to the ground, there could be interference with a radio field from the ground. Therefore, the output of the radio field of the remote controller 30 may be increased.

### 1-3. Characteristics, etc.

In the display device 10, the radio field intensity control system 1, or the radio field intensity control method according to the Embodiment 1, the display device 10 receives the flight information of the aircraft, establishes the intensity of the radio field to be outputted by the remote controller 30 in order to connect with the display device 10 on the basis of the flight information, and transmits radio field intensity information indicating the intensity of the radio field to the remote controller 30. **In** the remote controller 30, the output of the radio field is changed in accordance with the received radio field intensity information.

Therefore, the display device 10 can perceive the state of the aircraft and the wireless communication environment in real time, and establish and control the optimal radio field intensity of the remote controller 30 in accordance with this perceived information. Consequently, the passenger can use the remote controller wirelessly even in a restricted wireless communication environment. **In** addition, by not increasing the radio field intensity of the remote controller 30 more than necessary, the consumption of the battery of the remote controller 30 can be suppressed, and the burden of maintaining the remote controller 30 can therefore be suppressed.

### 2. Other embodiments

As above, the above embodiment has been described as an example of the technology disclosed in the present application. However, this example is not provided by way of limitation as to the technology in the present disclosure; the technology can be applied to embodiments in which changes, replacements, additions, omissions, etc., are made as appropriate. It is also possible to combine the constituent elements described in the above embodiment to form a new embodiment.

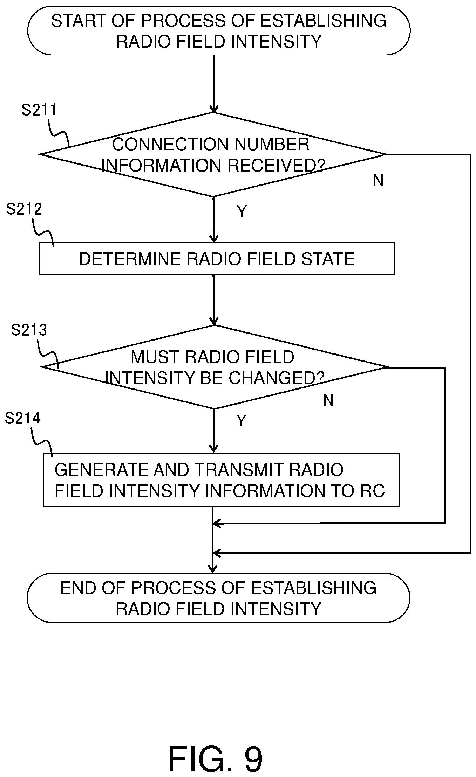

(1) FIG. 9 shows an example of the process of establishing the radio field intensity of a remote controller 30 according to another embodiment. The radio field intensity establishment process shown in FIG. 9 is similar to that of FIG. 7 and is equivalent to the process of step S2 in FIG. 6. The radio field intensity establishment process shown in FIG. 9 differs from that of Embodiment 1 in that the radio field intensity is established in accordance not with the flight information but with the number of display devices 10 connected to the remote controller 30.

The management device 50 acquires information indicating the presence or absence of connections made by display devices 10 to the remote controller 30. The management device 50 calculates the number of display devices 10 connected to remote controllers 30 (hereinafter referred to as the number of connections) and transmits this number as data to the relevant display devices 10.

The data acquisition unit 111 of FIG. 3 acquires data on the number of connections from the management device 50 (S211). The radio field intensity establishment unit 112 determines the current radio field intensity (S212). The radio field intensity establishment unit 112 determines whether or not to change the radio field intensity on the basis of the current radio field intensity (S213). In other words, the radio field intensity establishment unit 112 establishes whether or not to change (increase or reduce) the radio field output by referring to information indicating a radio field intensity corresponding to the number of connections, which has been determined and stored in advance. The radio field intensity information generation unit 113 generates radio field intensity information as in Embodiment 1, and transmits this information to the remote controller 30 via the Bluetooth^{®} communication unit 161 (S214).

A greater number of connections between display devices 10 and the remote controllers 30 correlates with a commensurately higher likelihood that there will be radio field interference with other display devices 10. Accordingly, in the present embodiment, when there are a large number of connections with the remote controllers 30, radio field interference can be avoided by increasing the radio field output. When there are a small number of connections with the remote controllers 30, the battery consumption of the remote controller 30 can be suppressed by reducing the radio field output.

The radio field intensity may be established or changed in accordance with the number of wireless terminals connected to wireless access points 40 (e.g., a wireless LAN) that use the same frequency band used for the communication of the remote controller 30 (e.g., Bluetooth^{®}), either instead of or in addition to the number of display devices 10 connected to remote controllers 30 described above.

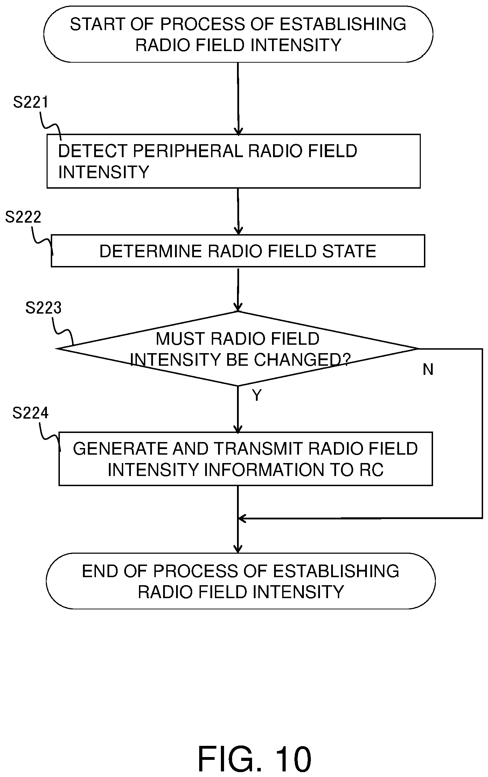

(2) FIG. 10 shows an example of the process of establishing the radio field intensity of a remote controller 30 according to another embodiment. The radio field intensity establishment process shown in FIG. 10 is similar to that of FIG. 7 and is equivalent to the process of step S2 in FIG. 6. The radio field intensity establishment process shown in FIG. 10 differs from that of Embodiment 1 in that the radio field intensity is established in accordance not with the flight information but with intensity of a radio field (e.g., of WiFi) other than the radio field used by the remote controller 30.

The display device 10 shown in FIG. 3 detects the intensity of the radio field (referred to below as a peripheral radio field) received by the antenna of the wireless communication unit 16 (one example of a second receiver) (S221). The radio field intensity establishment unit 112 determines the current radio field intensity from the remote controller 30 (S222). The radio field intensity establishment unit 112 determines whether or not the radio field intensity needs to be changed on the basis of the current radio field intensity (S223). In other words, the radio field intensity establishment unit 112 establishes whether to increase or reduce the radio field intensity of the remote controller 30 in accordance with the intensity of the peripheral radio field. The radio field intensity information generation unit 113 generates radio field intensity information as in Embodiment 1, and transmits this information to the remote controller 30 via the Bluetooth^{®} communication unit 161 (S224).

A stronger peripheral radio field of the display device 10 correlates with a commensurately higher possibility of interference with the radio field of the remote controller 30. Accordingly, in the present embodiment, when the peripheral radio field of the display device 10 is strong (e.g., when the intensity of the peripheral radio field exceeds a predetermined value), radio field interference can be avoided by increasing the radio field output of the remote controller 30. When the peripheral radio field of the display device 10 is weak (e.g., when the intensity of the peripheral radio field falls below another predetermined value), the battery consumption of the remote controller 30 can be suppressed by reducing the radio field output of the remote controller 30.

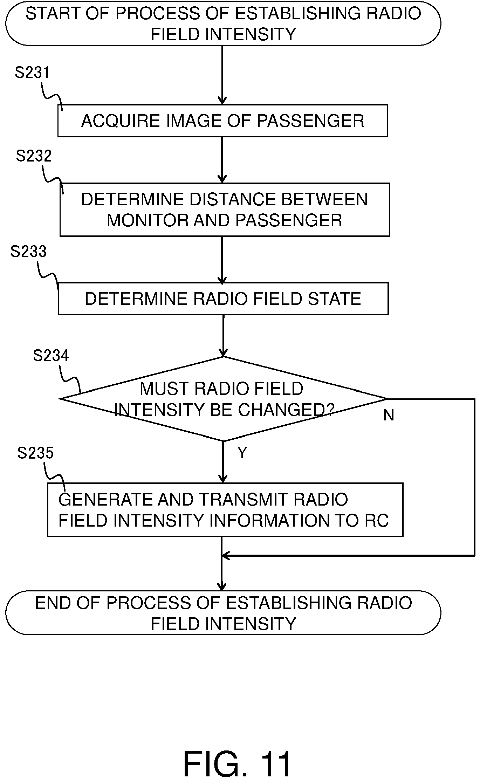

(3) FIG. 11 shows an example of the process of establishing the radio field intensity of a remote controller 30 according to another embodiment. The radio field intensity establishment process shown in FIG. 11 is similar to that of FIG. 7 and is equivalent to the process of step S2 in FIG. 6. The radio field intensity establishment process shown in FIG. 11 differs from that of Embodiment 1 in that the radio field intensity is established in accordance not with the flight information but with the distance between the display device 10 and the passenger.

The display device 10 shown in FIG. 3 uses the camera 19 to capture an image of the passenger in front of the monitor 17, and acquires an image of the passenger (S231). The data acquisition unit 111 determines the distance between the monitor 17 and the passenger from this image (S232). The radio field intensity establishment unit 112 determines the current radio field intensity from the remote controller 30 (S233). The radio field intensity establishment unit 112 determines whether or not the radio field intensity needs to be changed on the basis of the current radio field intensity (S234). In other words, the radio field intensity establishment unit 112 establishes whether to increase or reduce the radio field intensity in accordance with the distance between the monitor 17 and the passenger. The radio field intensity information generation unit 113 generates radio field intensity information as in Embodiment 1, and transmits this information to the remote controller 30 via the Bluetooth^{®} communication unit 161 (S235).

When the distance between the passenger and the monitor 17 is great (e.g., when the distance between the passenger and the monitor 17 exceeds a predetermined value), the radio field output of the remote controller 30 is increased. It is thereby possible to execute stable wireless communication between the display device 10 and the remote controller 30. When the distance between the passenger and the monitor 17 is small (e.g., when the distance between the monitor 17 and the passenger falls below another predetermined value), the radio field output of the remote controller 30 is reduced. The battery consumption of the remote controller 30 can thereby be suppressed.

The image for determining the distance between the monitor 17 and the passenger may be an image captured by another camera installed in the aircraft. In this case, the display device 10 may acquire the image from the management device 50.

(4) The embodiments of (1)-(3) above be carried out individually or in plurality, or any one or all may be carried out in combination with Embodiment 1.

(5) In the above embodiments, the management device 50 and the display devices 10 are connected by wires, but may be connected wirelessly.

(6) In the above embodiments, the radio field intensity control system 1 is provided with a management device 50, display devices 10, and remote controllers 30, but may be provided with the display devices 10 and remote controllers 30 alone.

(7) WiFi and Bluetooth^{®} described above are not provided by way of limitation as to the wireless communication protocol. Other wireless communication protocols may be used.

(8) In the above embodiments, a part or all of the processing of each functional block may be performed by a program. A part or all of the processing of each functional block may be executed by a processor in a computer. In addition, the program for performing each process may be stored in a hard disk, or ROM, or another storage device, and read out and executed in ROM or RAM.

(9) In the above embodiments, instead of a CPU or another processor, the system may include a processor configured from a dedicated electronic circuit designed to perform a predetermined function. In addition, the processor may be configured from one or a plurality of processors. In addition, use of the term "device" in the present specification may include cases of a plurality of constituent elements (devices, modules (components), etc.), and it does not matter whether or not all the constituent elements are in the same casing. There are also cases in which a plurality of devices stored in separate casings and connected via a network and one device in which a plurality of modules are stored in one casing may be referred to as a system.

(10) The above-described processes are not provided by way of limitation as to the flowcharts shown in FIGS. 7 and 9-11. The order of each process may be partially interchanged or the steps may be executed in parallel.

(11) In the above embodiments, an example in which the radio field intensity control system 1 of the present disclosure is installed in an aircraft was described. However, this example is not provided by way of limitation as to the present disclosure. The location where the radio field intensity control system 1 is installed may be a train, a bus, a ship, or another moving object or vehicle. In this case, radio field intensity control is executed in accordance with the operation information of individual vehicles.

(12) In the above embodiments, a dedicated remote controller of the display device 10 is not provided by way of limitation as to the remote controller 30. The remote controller 30 may be realized through a smartphone, a tablet PC, a handset, or another computer device referred to as a wireless terminal owned or used by a user.

### KEY TO SYMBOLS

- 1: Radio field intensity control system
- 2: Aircraft management system
- 10: Display device
- 11: CPU
- 13: Storage unit
- 15: Wired communication unit
- 16: Wireless communication unit
- 17: Monitor
- 19: Camera
- 30: Remote controller
- 31: CPU
- 33: Storage unit
- 35: Communication unit
- 37: Operation unit
- 38: Power source unit
- 39: Battery
- 40: Wireless access point
- 50: Management device
- 51: CPU
- 53: Storage unit
- 55: Communication unit
- 111: Data acquisition unit
- 112: Radio field intensity establishment unit
- 113: Radio field intensity information generation unit
- 161: Communication unit
- 311: Radio field intensity setting unit
- 312: Power source ON/OFF switching unit
- 313: Display device operation command unit
- 511: Data information transmission unit
- 531: Flight information storage unit

### CITATION LIST

### PATENT LITERATURE

[Patent Literature 1] Japanese Laid-Open Patent Publication No. 2013-128162
[Patent Literature 2] US Patent Application Publication US 2016/0241698 A1

## Claims

1. A display device (10) that is disposed in a moving body and is capable of wirelessly connecting to a wireless terminal, the display device (10) configured to display information in accordance with an operation of the wireless terminal by a passenger of the moving body,
the display device (10) comprising:
a first receiver configured to receive operation information, which is information pertaining to operation of the moving body;
a controller (30) configured to, on a basis of the operation information, establish an intensity of a first radio field to be outputted by the wireless terminal in order to connect to the display device (10); and
a transmitter configured to transmit radio field intensity information indicating the intensity of the first radio field to the wireless terminal **characterized in that**
the moving body is an aircraft, the operation information indicates at least one of a flying state, position, altitude, and seat information of the aircraft, and
establishing the intensity of the first radio field includes establishing to increase the output of the first radio field, reduce the output of the first radio field, set the output of the first radio field to OFF, or change the frequency band of the first radio field.

2. The display device (10) according to Claim 1, wherein
establishing the intensity of the first radio field includes establishing to increase an output of the first radio field, reduce the output of the first radio field, set the output of the first radio field to OFF, or change a frequency band of the first radio field.

3. The display device (10) according to Claim 1 or 2, wherein
the first receiver is configured to acquire a number of display devices (10) connected to corresponding wireless terminals from an external management device (50) capable of connecting to the display device (10), and
the controller (30) is configured to establish the intensity of the first radio field in accordance with the number of connected display devices (10).

4. The display device (10) according to any one of Claims 1 to 3, further comprising a second receiver configured to receive a second radio field different from the first radio field, wherein
the controller (30) is configured to establish the intensity of the first radio field in accordance with an intensity of the second radio field.

5. The display device (10) according to any one of Claims 1 to 4, further comprising an imaging unit configured to capture an image of the passenger in front of the display device (10) and acquire an image of the passenger, wherein
the controller (30) is configured to establish a distance between the wireless terminal and the display device (10) on a basis of the image of the passenger and establish the intensity of the first radio field in accordance with the distance.

6. The display device (10) according to Claim 1, wherein
the controller (30) is configured to establish to set the wireless terminal to OFF when the operation information indicates that the aircraft is taking off or landing.

7. The display device (10) according to any of the preceding claims, wherein
when the operation information indicates a predetermined position of the aircraft, the controller (30) is configured to establish to set the output of the first radio field to OFF, reduce the output of the first radio field, or change the frequency band of the first radio field in accordance with the predetermined position.

8. A radio field intensity control system (1) comprising:
the display device (10) according to any one of Claims 1 to 7, and
a wireless terminal that is capable of wirelessly connecting with the display device (10), the wireless terminal configured to change the output of the first radio field in accordance with the establishment of the intensity of the first radio field made by the controller (30).

9. The radio field intensity control system (1) according to Claim 8, further comprising a management device (50) capable of connecting to the display device (10) via the first receiver, the management device (50) configured to transmit the operation information to the display device (10).

10. A radio field intensity control method in a system comprising a wireless terminal disposed in a moving body and configured to be operated by a passenger of the moving body and a display device (10) disposed in the moving body and configured to display information in accordance with an operation of the wireless terminal, wherein the radio field control method further includes:
receiving operation information, which is information pertaining to operation of the moving body;
establishing an intensity of a first radio field to be outputted by the wireless terminal in order to connect to the display device (10) on a basis of the operation information;
transmitting radio field intensity information indicating the intensity of the first radio field to the wireless terminal; and
changing output of the first radio field in accordance with the radio field intensity information **characterized in that**
the moving body is an aircraft, the operation information indicates at least one of a flying state, position, altitude, and seat information of the aircraft, and
establishing the intensity of the first radio field includes establishing to increase the output of the first radio field, reduce the output of the first radio field, set the output of the first radio field to OFF, or change the frequency band of the first radio field.

## Patentansprüche

1. Anzeigegerät (10), das in einem sich bewegenden Körper angeordnet ist und in der Lage ist, sich drahtlos mit einem drahtlosen Endgerät zu verbinden, wobei das Anzeigegerät (10) eingerichtet ist, Informationen in Übereinstimmung mit einer Bedienung des drahtlosen Endgeräts durch einen Passagier des sich bewegenden Körpers anzuzeigen,
wobei das Anzeigegerät (10) umfasst:
einen ersten Empfänger, der eingerichtet ist, Betriebsinformationen zu empfangen, bei denen es sich um Informationen betreffend einen Betrieb des sich bewegenden Körpers handelt;
eine Steuerung (30), die eingerichtet ist, auf der Grundlage der Betriebsinformationen eine Intensität eines ersten Funkfeldes festzulegen, das von dem drahtlosen Endgerät auszugeben ist, um eine Verbindung mit dem Anzeigegerät (10) herzustellen; und
einen Übertrager, der eingerichtet ist, Funkfeldintensitätsinformationen, die die Intensität des ersten Funkfeldes angeben, an das drahtlose Endgerät zu übertragen, **dadurch gekennzeichnet, dass**
der sich bewegende Körper ein Flugzeug ist, die Betriebsinformationen mindestens eine von Flugzustands-, Positions-, Höhen- und Sitzinformation des Flugzeugs angibt und
das Festlegen der Intensität des ersten Funkfelds ein Festlegen umfasst, um die Ausgabe des ersten Funkfelds zu erhöhen, die Ausgabe des ersten Funkfelds zu verringern, die Ausgabe des ersten Funkfelds auf AUS zu setzen oder das Frequenzband des ersten Funkfelds zu ändern.

2. Anzeigegerät (10) nach Anspruch 1, wobei
das Festlegen der Intensität des ersten Funkfelds ein Festlegen umfasst, um eine Ausgabe des ersten Funkfelds zu erhöhen, die Ausgabe des ersten Funkfelds zu verringern, die Ausgabe des ersten Funkfelds auf AUS zu setzen oder ein Frequenzband des ersten Funkfelds zu ändern.

3. Anzeigegerät (10) nach Anspruch 1 oder 2, wobei
der erste Empfänger eingerichtet ist, eine Anzahl von Anzeigegeräten (10), die mit entsprechenden drahtlosen Endgeräten verbunden sind, von einem externen Verwaltungsgerät (50) zu erlangen, das in der Lage ist, sich mit dem Anzeigegerät (10) zu verbinden, und
die Steuerung (30) eingerichtet ist, die Intensität des ersten Funkfeldes entsprechend der Anzahl der verbundenen Anzeigegeräte (10) festzulegen.

4. Anzeigegerät (10) gemäß einem der Ansprüche 1 bis 3, ferner umfassend einen zweiten Empfänger, der eingerichtet ist, ein zweites Funkfeld zu empfangen, das sich vom ersten Funkfeld unterscheidet, wobei
die Steuerung (30) eingerichtet ist, die Intensität des ersten Funkfeldes entsprechend einer Intensität des zweiten Funkfeldes festzulegen.

5. Anzeigegerät (10) gemäß einem der Ansprüche 1 bis 4, ferner umfassend eine Bildgebungseinheit, die eingerichtet ist, ein Bild des Passagiers vor dem Anzeigegerät (10) zu erfassen und ein Bild des Passagiers aufzunehmen, wobei
die Steuerung (30) eingerichtet ist, eine Entfernung zwischen dem drahtlosen Endgerät und dem Anzeigegerät (10) auf der Grundlage des Bildes des Passagiers festzulegen und die Intensität des ersten Funkfeldes in Übereinstimmung mit der Entfernung festzulegen.

6. Anzeigegerät (10) nach Anspruch 1, wobei
die Steuerung (30) eingerichtet ist, festzulegen, das drahtlose Endgerät auf AUS zu setzen, wenn die Betriebsinformationen angeben, dass das Flugzeug startet oder landet.

7. Anzeigegerät (10) nach einem der vorhergehenden Ansprüche, wobei
die Steuerung (30) eingerichtet ist, wenn die Betriebsinformationen eine vorbestimmte Position des Flugzeugs angeben, festzulegen, die Ausgabe des ersten Funkfeldes auf AUS zu setzen, die Ausgabe des ersten Funkfeldes zu verringern oder das Frequenzband des ersten Funkfeldes gemäß der vorbestimmten Position zu ändern.

8. Funkfeldintensitäts-Steuersystem (1), umfassend:
das Anzeigegerät (10) nach einem der Ansprüche 1 bis 7 und
ein drahtloses Endgerät, das in der Lage ist, sich über eine drahtlose Verbindung mit dem Anzeigegerät zu verbinden, wobei das drahtlose Endgerät eingerichtet ist, die Ausgabe des ersten Funkfeldes in Übereinstimmung mit der Festlegung der Intensität des ersten Funkfeldes durch die Steuerung (30) zu ändern.

9. Funkfeldintensitäts-Steuersystem (1) nach Anspruch 8, ferner umfassend ein Verwaltungsgerät (50), das in der Lage ist, sich mit dem Anzeigegerät (10) über den ersten Empfänger zu verbinden, wobei das Verwaltungsgerät (50) eingerichtet ist, die Betriebsinformationen an das Anzeigegerät (10) zu übertragen.

10. Verfahren zur Steuerung der Intensität eines Funkfeldes in einem System, das ein drahtloses Endgerät, das in einem sich bewegenden Körper angeordnet und eingerichtet ist, von einem Passagier des sich bewegenden Körpers bedient werden kann, und ein Anzeigegerät (10), das in dem sich bewegenden Körper angeordnet und eingerichtet ist, Informationen in Übereinstimmung mit einer Bedienung des drahtlosen Endgeräts anzuzeigen, umfasst, wobei das Verfahren zur Steuerung des Funkfeldes ferner umfasst:
Empfangen von Betriebsinformationen, bei denen es sich um Informationen betreffend einen Betrieb des sich bewegenden Körpers handelt;
Festlegen einer Intensität eines ersten Funkfeldes, das von dem drahtlosen Endgerät auszugeben ist, um eine Verbindung mit dem Anzeigegerät (10) auf der Grundlage der Betriebsinformationen herzustellen;
Übertragen von Funkfeldintensitätsinformationen, die die Intensität des ersten Funkfeldes angeben, an das drahtlose Endgerät; und
Ändern einer Ausgabe des ersten Funkfeldes in Übereinstimmung mit den Funkfeldintensitätsinformationen, **dadurch gekennzeichnet, dass**
der sich bewegende Körper ein Flugzeug ist, die Betriebsinformationen mindestens eine von Flugzustands-, Positions-, Höhen- und Sitzinformation des Flugzeugs angibt, und
das Festlegen der Intensität des ersten Funkfelds ein Festlegen umfasst, um die Ausgabe des ersten Funkfelds zu erhöhen, die Ausgabe des ersten Funkfelds zu verringern, die Ausgabe des ersten Funkfelds auf AUS zu setzen oder das Frequenzband des ersten Funkfelds zu ändern.

## Revendications

1. Dispositif d'affichage (10) qui est disposé dans un corps mobile et qui est en mesure de se connecter sans fil à un terminal sans fil, le dispositif d'affichage (10) étant configuré pour afficher des informations conformément à un fonctionnement du terminal sans fil par un passager du corps mobile,
le dispositif d'affichage (10) comprenant :
un premier récepteur configuré pour recevoir des informations de fonctionnement, qui sont des informations concernant le fonctionnement du corps mobile ;
un dispositif de commande (30) configuré pour, sur la base des informations de fonctionnement, établir une intensité d'un premier champ radio devant être émis par le terminal sans fil afin de se connecter au dispositif d'affichage (10) ; et
un émetteur configuré pour transmettre des informations d'intensité de champ radio indiquant l'intensité du premier champ radio au terminal sans fil, **caractérisé en ce que**
le corps mobile est un aéronef, les informations de fonctionnement indiquant au moins un élément parmi un état de vol, une position, une altitude et des informations de siège de l'aéronef et
l'établissement de l'intensité du premier champ radio comprend l'établissement d'une augmentation de la sortie du premier champ radio, d'une réduction de la sortie du premier champ radio, d'un réglage de la sortie du premier champ radio sur ARRÊT ou d'une modification de la bande de fréquences du premier champ radio.

2. Dispositif d'affichage (10) selon la revendication 1,
l'établissement de l'intensité du premier champ radio comprenant l'établissement d'une augmentation d'une sortie du premier champ radio, d'une réduction de la sortie du premier champ radio, d'un réglage de la sortie du premier champ radio sur ARRÊT ou d'une modification d'une bande de fréquences du premier champ radio.

3. Dispositif d'affichage (10) selon la revendication 1 ou 2,
le premier récepteur étant configuré pour acquérir un certain nombre de dispositifs d'affichage (10) connectés à des terminaux sans fil correspondants à partir d'un dispositif de gestion externe (50) en mesure de se connecter au dispositif d'affichage (10) et
le dispositif de commande (30) étant configuré pour établir l'intensité du premier champ radio conformément au nombre de dispositifs d'affichage (10) connectés.

4. Dispositif d'affichage (10) selon l'une quelconque des revendications 1 à 3, comprenant en outre un second récepteur configuré pour recevoir un second champ radio différent du premier champ radio,
le dispositif de commande (30) étant configuré pour établir l'intensité du premier champ radio conformément à une intensité du second champ radio.

5. Dispositif d'affichage (10) selon l'une quelconque des revendications 1 à 4, comprenant en outre une unité d'imagerie configurée pour capturer une image du passager devant le dispositif d'affichage (10) et pour acquérir une image du passager,
le dispositif de commande (30) étant configuré pour établir une distance entre le terminal sans fil et le dispositif d'affichage (10) sur la base de l'image du passager et pour établir l'intensité du premier champ radio conformément à la distance.

6. Dispositif d'affichage (10) selon la revendication 1,
le dispositif de commande (30) étant configuré pour établir un réglage du terminal sans fil sur ARRÊT lorsque les informations de fonctionnement indiquent que l'aéronef est en train de décoller ou d'atterrir.

7. Dispositif d'affichage (10) selon l'une quelconque des revendications précédentes, dans lequel
lorsque les informations de fonctionnement indiquent une position prédéterminée de l'aéronef, le dispositif de commande (30) est configuré pour établir un réglage de la sortie du premier champ radio sur ARRÊT, une réduction de la sortie du premier champ radio ou une modification de la bande de fréquences du premier champ radio conformément à la position prédéterminée.

8. Système de commande (1) d'intensité de champ radio comprenant :
le dispositif d'affichage (10) selon l'une quelconque des revendications 1 à 7 et
un terminal sans fil qui est en mesure de se connecter sans fil au dispositif d'affichage (10), le terminal sans fil étant configuré pour modifier la sortie du premier champ radio conformément à l'établissement de l'intensité du premier champ radio effectué par le dispositif de commande (30).

9. Système de commande (1) d'intensité de champ radio selon la revendication 8, comprenant en outre un dispositif de gestion (50) en mesure de se connecter au dispositif d'affichage (10) par l'intermédiaire du premier récepteur, le dispositif de gestion (50) étant configuré pour transmettre les informations de fonctionnement au dispositif d'affichage (10).

10. Procédé de commande d'intensité de champ radio dans un système comprenant un terminal sans fil disposé dans un corps mobile et configuré pour être actionné par un passager du corps mobile et un dispositif d'affichage (10) disposé dans le corps mobile et configuré pour afficher des informations conformément à un fonctionnement du terminal sans fil,
le procédé de commande de champ radio comprenant en outre :
la réception d'informations de fonctionnement, qui sont des informations concernant le fonctionnement du corps mobile ;
l'établissement d'une intensité d'un premier champ radio devant être émis par le terminal sans fil afin de se connecter au dispositif d'affichage (10) sur la base des informations de fonctionnement;
la transmission d'informations d'intensité de champ radio indiquant l'intensité du premier champ radio au terminal sans fil ; et
la modification de la sortie du premier champ radio conformément aux informations d'intensité de champ radio, **caractérisé en ce que**
le corps mobile est un aéronef, les informations de fonctionnement indiquant au moins un élément parmi un état de vol, une position, une altitude et des informations de siège de l'aéronef et
l'établissement de l'intensité du premier champ radio comprend l'établissement d'une augmentation de la sortie du premier champ radio, d'une réduction de la sortie du premier champ radio, d'un réglage de la sortie du premier champ radio sur ARRÊT ou d'une modification de la bande de fréquences du premier champ radio.
